# EUROPÄISCHE PATENTSCHRIFT

(11) **EP 4 309 260 B1**
(45) Veröffentlichungstag und Bekanntmachung des Hinweises auf die Patenterteilung: **14.08.2024**
(21) Anmeldenummer: 23706006.6
(22) Anmeldetag: 17.02.2023
(51) Int. Cl.: H02J 3/38, H02S 50/00, H02S 50/10

(54) **VERFAHREN UND SCHALTUNGSANORDNUNG ZUM ERFASSEN EINER KENNLINIE EINES PV-GENERATORS**
METHOD AND CIRCUIT ARRANGEMENT FOR ACQUIRING A CHARACTERISTIC CURVE OF A PV GENERATOR
PROCÉDÉ ET AGENCEMENT DE CIRCUIT POUR ACQUÉRIR UNE COURBE CARACTÉRISTIQUE D'UN GÉNÉRATEUR PHOTOVOLTAÏQUE

(30) Priorität: 22.03.2022 DE 102022106717
(43) Veröffentlichungstag der Anmeldung: 24.01.2024
(73) Patentinhaber: SMA Solar Technology AG, 34266 Niestetal (DE)
(72) Erfinder: JILG, Martin, 37235 Hessisch Lichtenau (DE)
(86) Internationale Anmeldenummer: PCT/EP2023/054032
(87) Internationale Veröffentlichungsnummer: WO 2023/179984

(56) Entgegenhaltungen:
- EP-A1- 3 764 504
- WO-A1-2020/254029
- CN-A- 106 712 716
- CN-A- 107 017 836
- CN-A- 107 196 604

## Beschreibung

Die Anmeldung betrifft ein Verfahren und eine Schaltungsanordnung zum Erfassen einer Kennlinie eines Photovoltaik-Generators, kurz PV-Generators, sowie eine Energieerzeugungsanlage mit einer solchen Schaltungsanordnung. Das Erfassen einer Kennlinie eines PV-Generators kann auch als Kennlinien-Scan des PV-Generators oder als Scannen des PV-Generators bezeichnet werden.

In einer Energieerzeugungsanlage kann ein PV-Generator über einen DC/DC-Wandler (Gleichspannungswandler) mit einem Leistungswandler verbunden werden, wobei ein PV-Generator mehrere PV-Strings aufweisen kann, welche in Serie und/oder parallel verschaltet sein können. Ein PV-String kann wiederum mehrere PV-Module aufweisen. Bei dem Leistungswandler kann es sich insbesondere um einen DC/AC-Wandler (Wechselrichter) handeln, der mit einem AC-Netz, insbesondere einem AC-Versorgungsnetz, verbunden ist, um elektrische Leistung mit dem AC-Netz auszutauschen und insbesondere elektrische Leistung in das AC-Netz einzuspeisen.

Ein PV-Generator weist eine Spannungs-Strom-Kennlinie, kurz UI-Kennlinie, auf, die die Abhängigkeit des vom PV-Generator erzeugten DC-Stroms von der an den PV-Generator anliegenden PV-Spannung darstellt. Es kann erwünscht sein, die UI-Kennlinie des PV-Generators während des Betriebs zu erfassen. Insbesondere bei abgeregelten Energieerzeugungsanlagen ist aus den Schriften WO2014/118059 A1 und US 2020/0220357 A1 bekannt, beim Abfahren von UI-Kennlinien durch einzelne DC/DC-Wandler der Energieerzeugungsanlage die hierdurch verursachte Fluktuation der Gesamtleistung durch eine kompensierende Ansteuerung eines oder mehrerer anderer DC/DC-Wandler der Energieerzeugungsanlage auszugleichen und so die Gesamtleistung möglichst konstant zu halten. Diese kompensierende Ansteuerung stellt erhöhte Regelungs- und Kommunikationsanforderungen an die Energieerzeugungsanlage.

Auch in der Schrift US11,171 489 B2 wird z. B. ein Verfahren zum Erfassen von UI-Kennlinien für PV-Generatoren einer Energieerzeugungsanlage beschrieben, in dem ein nicht an dem Erfassen der UI-Kennlinie beteiligter Wandler die Leistungsvariation des die UI-Kennlinie erfassenden Wandlers kompensiert. Im Extremfall ist weiterhin offenbart, die Leistung der nicht am Erfassen beteiligten Wandler während der Kennlinienerfassung auf Null zu reduzieren.Der Anmeldung liegt die Aufgabe zugrunde, ein verbessertes Verfahren zum Erfassen einer Kennlinie eines PV-Generators aufzuzeigen. Außerdem soll eine Schaltungsanordnung zum Erfassen einer Kennlinie eines PV-Generators aufgezeigt werden.

Die Aufgabe wird durch ein Verfahren mit den Merkmalen des Patentanspruchs 1 oder mit den Merkmalen des Patentanspruchs 2 gelöst. Die Aufgabe wird weiter durch eine Schaltungsanordnung mit den Merkmalen des unabhängigen Patentanspruchs 7 oder mit den Merkmalen des unabhängigen Patentanspruchs 8 gelöst. Bevorzugte Ausführungsformen sind in den abhängigen Patentansprüchen angegeben.

In einer Energieerzeugungsanlage mit mehreren PV-Generatoren ist jeweils ein PV-Generator über einen zugeordneten DC/DC-Wandler mit einem DC/AC-Wandler verbunden. Die DC/DC-Wandler sind dabei ausgangsseitig mit einem Zwischenkreis als Eingangselement es DC/AC-Wandlers verbunden. Ein PV-Generator weist zumindest einen PV-String, bevorzugt mehrere PV-Strings auf. Mehrere PV-Strings eines PV-Generators können parallel verschaltet oder in Serie verschaltet oder in einer Mischform aus Serien- und Parallelschaltung verschaltet sein. Entsprechend kann der DC/DC-Wandler auf seiner Eingangsseite mit einem PV-String verbunden sein oder mit mehreren PV-Strings verbunden sein, welche parallel, seriell oder in einer Mischform davon mit dem DC/DC-Wandler verbunden sein können.

Die PV-Generatoren können über ihre jeweiligen zugeordneten DC/DC-Wandler in Parallelschaltung mit dem Zwischenkreis als Eingangselement des DC/AC-Wandlers verbunden sein. Alternativ können die PV-Generatoren über ihre jeweiligen zugeordneten DC/DC-Wandler in Serie mit dem Zwischenkreis als Eingangselement des DC/AC-Wandlers verbunden sein.

Eine Kennlinie eines der PV-Generatoren kann dadurch erfasst werden, dass ein sogenannter Scan durchgeführt wird, was auch als Scannen des PV-Generators bezeichnet werden kann. Beim Scannen des PV-Generators werden z. B. verschiedene Spannungswerte am Ausgang des PV-Generators durch den zugeordneten DC/DC-Wandler eingestellt und es wird bei dem eingestellten Spannungswert der durch den PV-Generator gelieferte Strom gemessen. Alternativ kann auch der durch den PV-Generator fließende Strom eingestellt und die resultierende Spannung gemessen werden. Durch Auftragen der gemessenen Stromwerte über den eingestellten Spannungswerten kann die UI-Kennlinie des PV-Generators erfasst werden.

Ein Verfahren zum Erfassen einer Kennlinie eines zu scannenden PV-Generators einer Mehrzahl von PV-Generatoren in einer solchen Energieerzeugungsanlage umfasst:
a) Reduzieren einer kumulativen Ausgabeleistung derjenigen DC/DC-Wandler, deren zugeordnete PV-Generatoren nicht zum Erfassen der Kennlinie vorgesehen sind, in Abhängigkeit von einer während des Erfassens der Kennlinie des zu scannenden PV-Generators zu erwartenden ausgangsseitigen Maximalleistung des mit dem zu scannenden PV-Generator verbundenen DC/DC-Wandlers, um sicherzustellen, dass die Summe der reduzierten kumulativen Ausgabeleistung und der zu erwartenden Maximalleistung des zu scannenden PV-Generators eine Nennleistung des DC/AC-Wandlers nicht übersteigt.
b) anschließendes Erfassen der Kennlinie des zu scannenden PV-Generators. In einer Energieerzeugungsanlage mit am Eingang des DC/AC-Wandlers parallel geschalteten DC/DC-Wandlern umfasst das Verfahren weiter:
c) Während des Erfassens der Kennlinie: konstant halten einer Spannung des Zwischenkreises durch den DC/AC-Wandler. Die Spannung des Zwischenkreises entspricht dabei der Spannung auf der Ausgangsseite der DC/DC-Wandler. Der Wert der Spannung des Zwischenkreises in diesem Schritt entspricht dabei bevorzugt einem Wert größer oder gleich der Leerlaufspannung des zu scannenden PV-Generators, was bei Einsatz eines Hochsetzstellers als DC/DC-Wandler gewährleistet ist. Das Konstanthalten erfolgt bevorzugt durch ein Ansteuern von getakteten Halbleiterschaltern des DC/AC-Wandlers.

In einer Energieerzeugungsanlage, in der die DC/DC-Wandler in Serie geschaltet mit dem Zwischenkreis am Eingang des DC/AC-Wandlers verbunden sind, umfasst das Verfahren:
c1) Während des Erfassens der Kennlinie: Konstanthalten eines Stromes, der durch die Serienschaltung der DC/DC-Wandler fließt, durch den DC/AC-Wandler. Das konstant-Halten erfolgt bevorzugt durch ein Ansteuern von getakteten Halbleiterschaltern des DC/AC-Wandlers.

Das erfindungsgemäße Verfahren zeichnet sich dadurch aus, dass es einfach umzusetzen ist und einen geringen Verzicht auf erzeugbare Leistung aufgrund der Durchführung des Scans verursacht. Gleichzeitig wird eine Überlastung des DC/AC-Wandlers vermieden, was eine Gefahr gerade bei Anlagen darstellt, bei denen die mögliche Nennleistung der verbauten PV-Generatoren deutlich über der Nennleistung des DC/AC-Wandlers liegt, so dass diese Anlagen regelmäßig und damit auch unmittelbar vor der Durchführung des erfindungsgemäßen Verfahrens mit der Nennleistung des DC/AC-Wandlers betrieben werden.

Beim Scannen eines der PV-Generatoren verändert sich die Ausgabeleistung des zu scannenden PV-Generators, da verschiedene Punkte der UI-Kennlinie durchlaufen werden und diese verschiedenen Punkte jeweils eine andere Ausgabeleistung des zu scannenden PV-Generators aufweisen. Hierbei weist die sich ändernde Ausgabeleistung des zu scannenden PV-Generators eine Maximalleistung auf, die im Punkt maximaler Leistung (MPP) auf der UI-Kennlinie des zu scannenden PV-Generators liegt. Insgesamt sollte die Summe aus Ausgabeleistung des zu scannenden PV-Generators und der kumulativen Ausgabeleistung der übrigen PV-Generatoren die Nennleistung des DC/AC-Wandlers nicht überschreiten, um Schäden am DC/AC-Wandler zu vermeiden und die Netzverträglichkeit für das AC-Netz zu unterstützen.

Die zu erwartende Maximalleistung des am Scan beteiligten PV-Generators kann vor dem Reduzieren der kumulativen Ausgabeleistung durch das Verfahren ermittelt werden. Die zu erwartende Maximalleistung kann dabei von Erfahrungswerten, z. B. aus vorherigen Scans oder anderweitig bekannten Maximalleistungen der nicht am Scan beteiligten PV-Generatoren beruhen und außerdem von der Temperatur, Sonneneinstrahlung und ähnlichen Umweltfaktoren abhängen beziehungsweise hieraus ermittelt werden.

Durch das oben beschriebene Verfahren kann dies erreicht werden, da die kumulative Ausgabeleistung der nicht am Scan beteiligten PV-Generatoren während des Scans so weit abgesenkt wird, dass die Summe der Ausgabeleistungen aller PV-Generatoren die Nennleistung des DC/AC-Wandlers während des Scans nicht überschreitet. Zugleich wird ermöglicht, auch während eines Kennlinienscans bei einem der PV-Generatoren weiter möglichst viel elektrische Leistung zu produzieren und über den DC/AC-Wandler abzugeben. Dies ist von Vorteil, da hierdurch die Erzeugung elektrischer Leistung weiter auf akzeptablem Niveau gehalten werden kann. Es wird so viel Abstand zur Nennleistung des DC/AC-Wandlers eingehalten, dass die Kennlinie des zu scannenden PV-Generators möglichst komplett durchlaufen werden kann. Es kann sogar sein, dass die Ausgabeleistung der einzelnen nicht am Scan beteiligten DC/DC-Wandler und der zugehörigen PV-Generatoren nicht oder nicht wesentlich reduziert werden muss.

Der Vorteil des Verfahrens ist, dass es leicht zu implementieren ist, da die kumulative Ausgabeleistung der nicht am Scan beteiligten DC/DC-Wandler während des Scans nicht verändert werden muss, sondern auf einem konstanten Niveau verbleiben kann und trotzdem elektrische Wirkleistung auf einem akzeptablen Niveau erzeugt und dem AC-Netz zur Verfügung gestellt werden kann.

Erfindungsgemäß werden während des Erfassens der Kennlinie die individuellen Ausgabeleistungen derjenigen DC/DC-Wandler, deren zugeordnete PV-Generatoren nicht zum Erfassen der Kennlinie vorgesehen sind, konstant gehalten. Die individuellen Ausgabeleistungen können dabei gegenüber der Ausgabeleistung im jeweiligen Punkt maximaler Leistung der zugehörigen PV-Generatoren abgesenkt sein, um die kumulative Ausgabeleistung der nicht am Scan beteiligten DC/DC-Wandler abzusenken. Jedoch wird weiter von diesen PV-Generatoren elektrische Leistung produziert, wenn auch in reduzierter Form. Das Konstanthalten der individuellen Ausgabeleistungen hat dabei den Vorteil, dass es das Verfahren vereinfacht und der Regelaufwand reduziert werden kann.

In einer Ausführungsform des Verfahrens erfolgt das Erfassen der Kennlinie des zu scannenden PV-Generators in einem gesteuerten Betrieb des dem zu scannenden PV-Generator zugeordneten DC/DC-Wandlers. Der gesteuerte Betrieb hat dabei gegenüber einem geregelten Betrieb den Vorteil, dass auf eine Regelschleife mit Rückkopplung (feedback) verzichtet werden kann und das Verfahren einfacher und schneller wird. Gegenüber einem geregelten Betrieb, bei dem z. B. ein Spannungswert gezielt eingeregelt wird, was eine Rückkopplung des am PV-Generator anliegenden Spannungswertes umfasst, wird bei einem gesteuerten Betrieb lediglich etwas ohne Rückkopplung eingestellt. Z. B. kann zumindest ein Parameter des DC/DC-Wandlers eingestellt werden und der DC/DC-Wandler so angesteuert werden. Für den Scan wird diese Einstellung bzw. dieser Parameter dann sukzessive verändert, um die Kennlinie zu erfassen, indem z. B. durch Verändern des Parameters die am PV-Generator anliegende Spannung verändert und gemessen wird und der bei der anliegenden Spannung vom PV-Generator abgegebene Strom gemessen wird. Dieser Parameter kann insbesondere der Tastgrad sein, mit dem der DC/DC-Wandler angesteuert wird. Besonders bevorzugt wird der Parameter beziehungsweise der Tastgrad entsprechend eines vorgegebenen Zeitverlaufs variiert, wodurch sich die Reproduzierbarkeit des Scans verbessert und nachträgliche Korrekturberechnungen vereinfacht werden.

In einer Ausführungsform des Verfahrens umfasst der gesteuerte Betrieb eine Strombegrenzung zur Vermeidung einer Überschreitung des zulässigen Eingangsstroms des dem zu scannenden PV-Generators zugeordneten DC/DC-Wandlers. Die Strombegrenzung dient zum Schutz des DC/DC-Wandlers und kann z. B. als Schutzschaltung oder als überlagerte, begrenzend wirkende Regelung ausgeführt sein. Erst bei einem Überschreiten des zulässigen Eingangsstromes des DC/DC-Wandlers wird die Schutzschaltung aktiviert beziehungsweise es greift die überlagerte Regelung begrenzend ein. Ansonsten hat die Strombegrenzung keinen Einfluss auf den Scanvorgang. Als Reaktion auf die Aktivierung kann der Scan unterbrochen werden und danach z. B. mit veränderter Ansteuerung fortgeführt werden, um ein erneutes Aktivieren der Schutzschaltung oder der überlagerten Regelung zu vermeiden.

In einer Ausführungsform des Verfahrens ist der angesteuerte Parameter der Tastgrad des DC/DC-Wandlers. Im gesteuerten Betrieb wird daher Tastgrad des dem zu scannenden PV-Generator zugeordneten DC/DC-Wandlers angesteuert und sukzessive verändert. Der Scan zum Erfassen der Kennlinie kann dabei insbesondere unter Verwendung eines vorgegebenen Verlaufs des Tastgrades erfolgen.

In einer Ausführungsform umfasst das Verfahren nach Erfassen der Kennlinie des zu scannenden PV-Generators:
d) Beenden der Reduzierung der kumulativen Ausgabeleistung derjenigen DC/DC-Wandler, deren zugeordnete PV-Generatoren nicht zum Erfassen der Kennlinie vorgesehen sind.

Hierdurch kann erreicht werden, dass die Reduktion der Ausgabeleistungen nur während eines Scans erfolgt und nach Beenden des Scans die Leistungsabgabe wieder in nicht-reduzierter Form erfolgen kann.

Eine Schaltungsanordnung zum Erfassen einer Kennlinie eines zu scannenden PV-Generators einer Mehrzahl von PV-Generatoren in einer Energieerzeugungsanlage ist vorgesehen und eingerichtet,
- diejenigen DC/DC-Wandler, deren zugeordnete PV-Generatoren nicht zum Erfassen der Kennlinie vorgesehen sind, in Abhängigkeit von einer während des Erfassens der Kennlinie des zu scannenden PV-Generators zu erwartenden ausgangsseitigen Maximalleistung des mit dem zu scannenden PV-Generator verbundenen DC/DC-Wandlers so zu regeln, dass ihre kumulative Ausgabeleistung reduziert wird, um sicherzustellen, dass die Summe der kumulativen Ausgabeleistung und der zu erwartenden Maximalleistung des zu scannenden PV-Generators eine Nennleistung des DC/AC-Wandlers nicht übersteigt,
- die Kennlinie des zu scannenden PV-Generators zu erfassen.

In einer ersten Ausführungsform der Energieerzeugungsanlage, in der jeder der PV-Generatoren jeweils über einen zugeordneten DC/DC-Wandler ausgangsseitig parallel mit dem Zwischenkreis als Eingangselement des DC/AC-Wandlers verbunden ist, ist die Schaltungsanordnung vorgesehen und eingerichtet, während des Erfassens der Kennlinie eine Spannung des Zwischenkreises und die individuellen Ausgabeleistungen derjenigen DC/DC-Wandler (12), deren zugeordnete PV-Generatoren (2) nicht zum Erfassen der Kennlinie vorgesehen sind, konstant zu halten.

In einer zweiten Ausführungsform der Energieerzeugungsanlage, in der die PV-Generatoren jeweils über einen zugeordneten DC/DC-Wandler ausgangsseitig in Serie mit dem Zwischenkreis als Eingangselement des DC/AC-Wandlers verbunden sind, ist die Schaltungsanordnung vorgesehen und eingerichtet, während des Erfassens der Kennlinie einen Strom durch die Serienschaltung der DC/DC-Wandler und die individuellen Ausgabeleistungen derjenigen DC/DC-Wandler (12), deren zugeordnete PV-Generatoren (2) nicht zum Erfassen der Kennlinie vorgesehen sind, konstant zu halten.

Die zu erwartende Maximalleistung des am Scan beteiligten DC/DC-Wandlers kann vor dem Reduzieren der kumulativen Ausgabeleistung durch die Schaltungsanordnung ermittelt werden. Die zu erwartende Maximalleistung kann dabei von Erfahrungswerten, z. B. aus vorherigen Scans beruhen und außerdem von der Temperatur, Sonneneinstrahlung und ähnlichen Umweltfaktoren abhängen. Die erforderliche Reduzierung kann auch in konservativer Weise aus den Nenngrößen des scannenden DC/DC-Wandlers bestimmt werden, beispielsweise aus dem Nennstrom oder der Nennleistung.

In einer Ausführungsform ist die Schaltungsanordnung in dem DC/AC-Wandler und/oder den DC/DC-Wandlern angeordnet und insbesondere ausgebildet und eingerichtet, zusätzlich Regelungs- und/oder Steuerungsaufgaben des DC/AC-Wandlers und/oder der DC/DC-Wandler wahrzunehmen. Insbesondere kann die Schaltungsanordnung als zumindest eine Recheneinheit ausgebildet sein, die in dem DC/AC-Wandler und/oder den DC/DC-Wandlern angeordnet ist. Die zumindest eine Recheneinheit kann dann optional eingerichtet und ausgebildet sein, zusätzlich Regelungs- und/oder Steuerungsaufgaben des DC/AC-Wandlers und/oder der DC/DC-Wandler auszuführen.

Eine Energieerzeugungsanlage mit einem DC/AC-Wandler und mit einer Mehrzahl von PV-Generatoren, wobei die PV-Generatoren jeweils über einen zugeordneten DC/DC-Wandler ausgangsseitig parallel oder in Serie mit einem Zwischenkreis als Eingangselement des DC/AC-Wandlers verbunden sind, kann eine zuvor beschriebene Schaltungsanordnung aufweisen. Ein Scan eines PV-Generators kann nach einem der zuvor beschriebenen Verfahren erfolgen. Nach dem Scan eines PV-Generators kann ein Scan eines weiteren der Mehrzahl von PV-Generatoren nach dem beschriebenen Verfahren erfolgen. Es ist möglich, einen Teil oder alle der Mehrzahl von PV-Generatoren der Energieerzeugungsanlage nacheinander mittels des beschriebenen Verfahrens zu scannen.

Im Folgenden wird die Anmeldung anhand von in den Figuren dargestellten Ausführungsbeispielen weiter erläutert und beschrieben.
Fig. 1 zeigt schematisch ein Verfahren zum Erfassen einer Kennlinie eines PV-Generators,
Fig. 2 zeigt schematisch Verläufe von charakteristischen elektrischen Größen in einer Energieerzeugungsanlage,
Fig. 3 zeigt schematisch ein Beispiel einer Energieerzeugungsanlage mit parallel geschalteten DC/DC-Wandlern und
Fig. 4 zeigt schematisch ein Beispiel einer Energieerzeugungsanlage mit seriell geschalteten DC/DC-Wandlern.

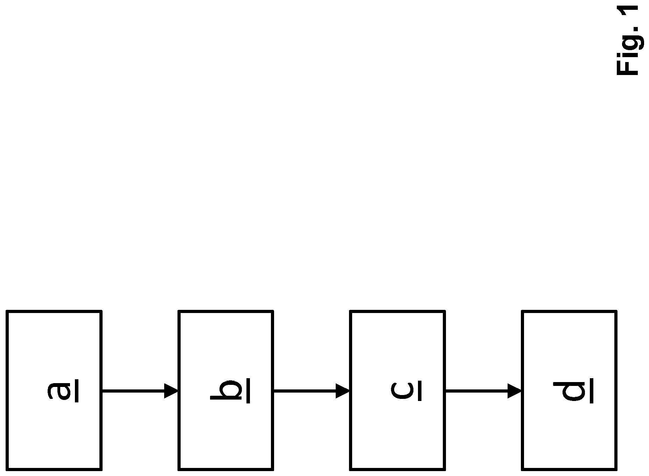

Fig. 1 zeigt schematisch ein Verfahren zum Erfassen einer Kennlinie eines zu scannenden PV-Generators 2 einer Mehrzahl von PV-Generatoren 2 in einer Energieerzeugungsanlage 10. Das Verfahren umfasst:
a) Reduzieren einer kumulativen Ausgabeleistung KA derjenigen DC/DC-Wandler 12, deren zugeordnete PV-Generatoren 2 nicht zum Erfassen der Kennlinie vorgesehen sind. Die Reduzierung erfolgt in Abhängigkeit von einer während des Erfassens der Kennlinie des zu scannenden PV-Generators 2 zu erwartenden ausgangsseitigen Maximalleistung Pscan des mit dem zu scannenden PV-Generator 2 verbundenen DC/DC-Wandlers 12. Die Reduktion wird so gewählt, dass die Summe der kumulativen Ausgabeleistung KA und der zu erwartenden Maximalleistung Pscan eine Nennleistung PN des DC/AC-Wandlers 20 nicht übersteigt
b) Anschließendes Erfassen der Kennlinie des zu scannenden PV-Generators 2.

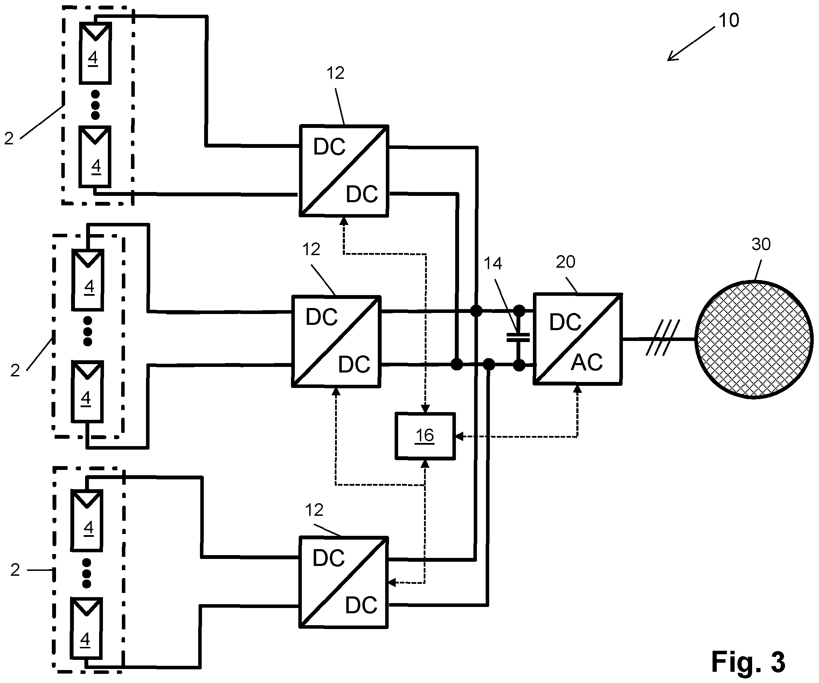

Ist die Energieerzeugungsanlage 10 ausgestaltet wie in Fig. 3 dargestellt, wo jeder der PV-Generatoren 2 über jeweils einen zugeordneten DC/DC-Wandler 12 ausgangsseitig parallel mit einem Zwischenkreis 14 als Eingangselement eines DC/AC-Wandlers 20 verbunden ist, so wird
c) während des Erfassens der Kennlinie eine Spannung UZK des Zwischenkreises 14 durch den DC/AC-Wandler 20 konstant gehalten.

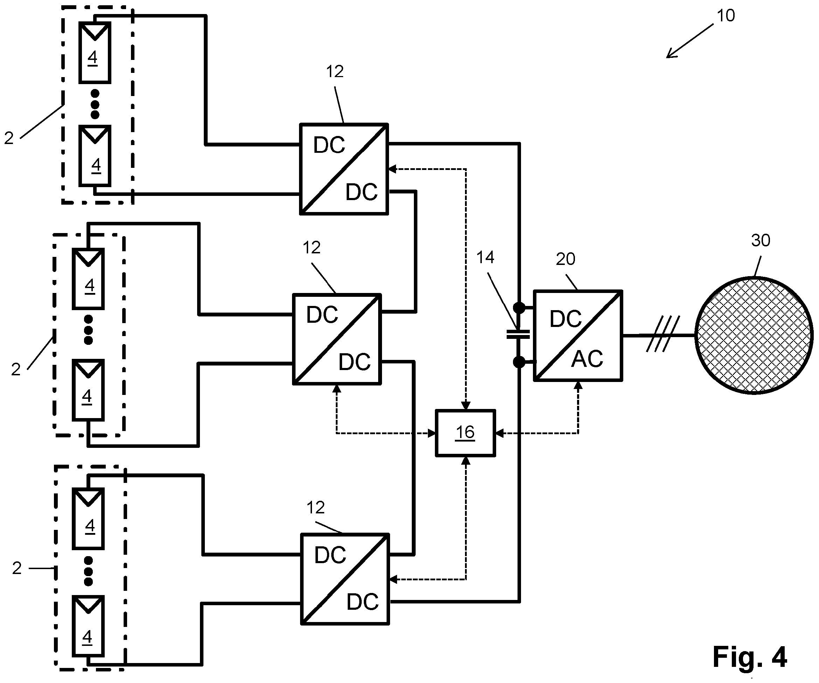

Ist in einer alternativen Ausführungsform die Energieerzeugungsanlage 10 ausgestaltet wie die in Fig. 4 dargestellt, wo die PV-Generatoren 2 über jeweils einen zugeordneten DC/DC-Wandler 12 ausgangsseitig seriell mit einem Zwischenkreis 14 als Eingangselement eines DC/AC-Wandlers 20 verbunden sind, so wird
c1) während des Erfassens der Kennlinie ein Strom der Serienschaltung der DC/DC-Wandler 12 durch den DC/AC-Wandler 20 konstant gehalten.

Das Konstanthalten der Spannung von c) oder des Stromes von c1) kann dabei durch eine Schaltungsanordnung 16, welche optional als Regeleinheit des DC/AC-Wandlers 20 ausgebildet sein kann, erfolgen.

Nach Erfassen der Kennlinie des zu scannenden PV-Generators wird d) die Reduzierung der kumulativen Ausgabeleistung KA derjenigen DC/DC-Wandler 12, deren zugeordnete PV-Generatoren 2 nicht zum Erfassen der Kennlinie vorgesehen sind, beendet.

Hierdurch kann nach einem Scan wieder zu einer Leistungsabgabe wie vor dem Scanvorgang zurückgekehrt werden.

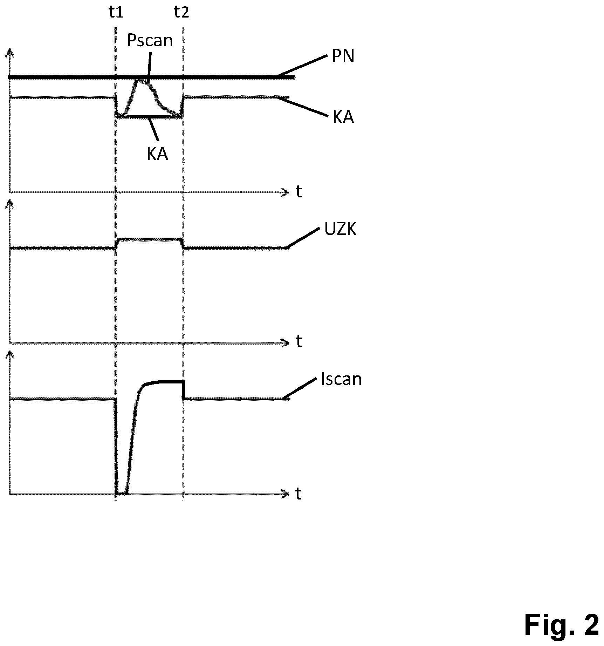

In Fig. 2 sind beispielhaft elektrische Größen in der Energieerzeugungsanlage 10 vor, während und nach einem Scanvorgang dargestellt. Der Scanvorgang eines PV-Generators startet zum Zeitpunkt t1 und endet zum Zeitpunkt t2.

Im obersten Teil ist die Nennleistung PN des DC/AC-Wandlers 20 aufgetragen. Darunter ist die kumulative Ausgabeleistung KA derjenigen DC/DC-Wandler 12 dargestellt, die nicht am Scanvorgang beteiligt sind, weil ihre zugeordneten PV-Generatoren nicht zum Scannen vorgesehen sind. Während des Scanvorgangs, also zwischen t1 und t2, wird diese kumulative Ausgabeleistung KA abgesenkt und konstant auf dem abgesenkten Wert gehalten.

Der am Scan beteiligte DC/DC-Wandler wird bevorzugt gesteuert betrieben, d. h. sein Tastgrad wird so verändert, dass an dem angeschlossenen zu scannenden PV-Generator die Spannung so verändert wird, dass eine Kennlinie erfasst werden kann. Insbesondere kann der Tastgrad rampenförmig verändert werden. Der während des Scannens vom PV-Generator abgegebene Strom Iscan ist in dem unteren Teil von Fig. 2 dargestellt. Die von dem am Scan beteiligten DC/DC-

Wandler während des Scans abgegebene Leistung Pscan ist im oberen Teil der Fig. 2 über der kumulativen Ausgangsleistung KA aufgetragen. Es ist zu sehen, dass die Absenkung der kumulativen Ausgangsleistung KA so gewählt wurde, dass die Summe aus der Maximalleistung der Ausgangsleistung Pscan des am Scan beteiligten PV-Generators 2 und der kumulativen Ausgangsleistung während des Scanvorgangs unter der Nennleistung PN des DC/AC-Wandlers 20 bleibt.

Für eine Ausführungsform der Energieerzeugungsanlage 10, wie sie in Fig. 3 dargestellt ist, wird während des Scanvorgangs die Zwischenkreisspannung UZK konstant gehalten. Dies ist in der Mitte von Fig. 2 ist dargestellt. Die Zwischenkreisspannung UZK entspricht dabei bevorzugt der Leerlaufspannung des zu scannenden PV-Generators 2.

Für eine Ausführungsform der Energieerzeugungsanlage 10, wie sie in Fig. 4 dargestellt ist, wird während des Scanvorgangs der Strom, der die in Serie geschalteten DC/DC-Wandler durchfließt, konstant gehalten.

Fig. 3 zeigt eine Ausführungsform der Energieerzeugungsanlage 10 mit einem DC/AC-Wandler 20 und mit einer Mehrzahl von PV-Generatoren 2, welche jeweils eine Mehrzahl von in Reihe verschalteten PV-Modulen 4 aufweisen. Die PV-Generatoren 2 sind über einen jeweils zugeordneten DC/DC-Wandler 12 ausgangsseitig parallel mit einem Zwischenkreis 14 als Eingangselement des DC/AC-Wandlers 20 verbunden. Über den DC/AC-Wandler 20 speist die Energieerzeugungsanlage 10 elektrische Leistung in ein AC-Netz 30 ein. Die Energieerzeugungsanlage 10 weist eine Schaltungsanordnung 16 auf, welche ausgebildet und eingerichtet ist, das oben beschriebene Verfahren auszuführen.

Insbesondere ist die Schaltungsanordnung 16 ausgebildet und eingerichtet, diejenigen DC/DC-Wandler 12, deren zugeordnete PV-Generatoren 2 nicht zum Erfassen der Kennlinie vorgesehen sind, in Abhängigkeit von einer während des Erfassens der Kennlinie des zu scannenden PV-Generators 2 zu erwartenden ausgangsseitigen Maximalleistung Pscan des mit dem zu scannenden PV-Generator 2 verbundenen DC/DC-Wandlers 12 so zu regeln, dass ihre kumulative Ausgabeleistung KA reduziert wird, um sicherzustellen, dass die Summe der kumulativen Ausgabeleistung KA und der zu erwartenden Maximalleistung Pscan eine Nennleistung PN des DC/AC-Wandlers 20 nicht übersteigt. Außerdem ist die Schaltungsanordnung 16 ausgebildet und eingerichtet, die Kennlinie des zu scannenden PV-Generators 2 zu erfassen, indem der dem zu scannenden PV-Generator 2 zugeordnete DC/DC-Wandler so angesteuert wird, dass der Tastgrad über mehrere Taktperioden hinweg gleich gehalten wird. Hierdurch ist die Spannung am zu scannenden PV-Generator 2 gegeben und der zugehörige Messwert, der vom zu scannenden PV-Generator 2 abgegebene Strom, kann gezielt ermittelt werden. Danach kann der Tastgrad verändert werden, über mehrere Taktperioden hinweg gehalten werden und der nächste Messwert der Kennlinie ermittelt werden. Dieser Vorgang kann wiederholt werden, bis die gesamte Kennlinie, vom Leerlaufpunkt bis zum Kurzschlusspunkt, durchlaufen ist.

In der Energieerzeugungsanlage 10 von Fig. 3 ist die Schaltungsanordnung 16 außerdem vorgesehen und eingerichtet, während des Erfassens der Kennlinie die Spannung des Zwischenkreises konstant zu halten.

Fig. 4 zeigt eine Ausführungsform der Energieerzeugungsanlage 10 mit dem DC/AC-Wandler 20 und mit einer Mehrzahl von PV-Generatoren 2, welche jeweils eine Mehrzahl von in Reihe verschalteten PV-Modulen 4 aufweisen. Die PV-Generatoren 2 sind über den jeweils zugeordneten DC/DC-Wandler ausgangsseitig in Serie mit dem Zwischenkreis 14 als Eingangselement des DC/AC-Wandlers 20 verbunden. Über den DC/AC-Wandler 20 speist die Energieerzeugungsanlage 10 elektrische Leistung in das AC-Netz 30 ein. Die Energieerzeugungsanlage 10 weist die Schaltungsanordnung 16 auf, welche ausgebildet und eingerichtet ist, das oben beschriebene Verfahren auszuführen. Insbesondere ist die Schaltungsanordnung 16 ausgebildet und eingerichtet, diejenigen DC/DC-Wandler 12, deren zugeordnete PV-Generatoren 2 nicht zum Erfassen der Kennlinie vorgesehen sind, in Abhängigkeit von einer während des Erfassens der Kennlinie des zu scannenden PV-Generators 2 zu erwartenden ausgangsseitigen Maximalleistung Pscan des mit dem zu scannenden PV-Generator 2 verbundenen DC/DC-Wandlers 12 so zu regeln, dass ihre kumulative Ausgabeleistung KA reduziert wird, um sicherzustellen, dass die Summe der kumulativen Ausgabeleistung KA und der zu erwartenden Maximalleistung Pscan eine Nennleistung PN des DC/AC-Wandlers 20 nicht übersteigt. Außerdem ist die Schaltungsanordnung 16 ausgebildet und eingerichtet, die Kennlinie des zu scannenden PV-Generators 2 zu erfassen. Die Erfassung der Kennlinie erfolgt dabei in analoger Weise, wie oben zu Fig. 3 beschrieben.

In der Energieerzeugungsanlage 10 von Fig. 4 ist die Schaltungsanordnung 16 außerdem vorgesehen und eingerichtet, während des Erfassens der Kennlinie einen Strom durch die Serienschaltung der DC/DC-Wandler konstant zu halten.

Es ist möglich, dass die Schaltungsanordnung 16, wie in Fig. 3 und in Fig. 4 dargestellt, als separate Einheit, z. B. als Recheneinheit ausgebildet ist und mit dem DC/AC-Wandler 20 und den DC/DC-Wandlern z. B. über Kommunikationsleitungen Informationen austauscht. Es ist ebenso möglich, dass die Schaltungsanordnung 16 in dem DC/AC-Wandler 20 und/oder den DC/DC-Wandlern 12 angeordnet ist. Sie kann insbesondere ausgebildet und eingerichtet sein, zusätzlich Regelungs- und/oder Steuerungsaufgaben des DC/AC-Wandlers 20 und/oder der DC/DC-Wandler 12 wahrzunehmen. Insbesondere kann die Schaltungsanordnung 16 als zumindest eine Recheneinheit ausgebildet sein, die in dem DC/AC-Wandler 20 und/oder den DC/DC-Wandlern 12 angeordnet ist. Die zumindest eine Recheneinheit kann z. B. als die Regeleinheit des DC/AC-Wandlers 20 oder als Teil derselben ausgebildet sein. Die Schaltungsanordnung 16 kann insbesondere eingerichtet und ausgebildet sein, zusätzlich Regelungs- und/oder Steuerungsaufgaben des DC/AC-Wandlers 20 und/oder der DC/DC-Wandler 12 auszuführen.

Ein Scan der Mehrzahl von PV-Generatoren 2 der Energieerzeugungsanlage 10 kann nacheinander bei jeweils einem PV-Generator erfolgen. Es ist dabei möglich, einen Teil oder alle der Mehrzahl von PV-Generatoren der Energieerzeugungsanlage 10 nacheinander mittels des beschriebenen Verfahrens zu scannen.

### BEZUGSZEICHENLISTE

- t: Zeit
- t1: Start Scan
- t2: Ende Scan
- PN: Nennleistung des DC/AC-Wandlers
- KA: kumulative Ausgabeleistung
- UZK: Spannung des Zwischenkreises
- Iscan: Ausgangsstrom des zu scannenden PV-Generators
- Pscan: Ausgangsleistung beim Scan
- 2: PV-Generator
- 4: PV-Modul
- 10: Energieerzeugungsanlage
- 12: DC/DC-Wandler
- 14: Zwischenkreis
- 16: Schaltungsanordnung
- 20: DC/AC-Wandler
- 30: AC-Netz
- a), b), c), d): Verfahrensschritte

## Patentansprüche

1. Verfahren zum Erfassen einer Kennlinie eines zu scannenden PV-Generators (2) einer Mehrzahl von PV-Generatoren (2) in einer Energieerzeugungsanlage (10), wobei jeder der PV-Generatoren (2) jeweils über einen zugeordneten DC/DC-Wandler (12) ausgangsseitig parallel mit einem Zwischenkreis (14) als Eingangselement eines DC/AC-Wandlers (20) verbunden ist, das Verfahren umfassend:
a) Reduzieren einer kumulativen Ausgabeleistung (KA) derjenigen DC/DC-Wandler (12), deren zugeordnete PV-Generatoren (2) nicht zum Erfassen der Kennlinie vorgesehen sind, in Abhängigkeit von einer während des Erfassens der Kennlinie des zu scannenden PV-Generators (2) zu erwartenden ausgangsseitigen Maximalleistung (Pscan) des mit dem zu scannenden PV-Generator (2) verbundenen DC/DC-Wandlers (12), um sicherzustellen, dass die Summe der reduzierten kumulativen Ausgabeleistung (KA) und der zu erwartenden Maximalleistung (Pscan) des zu scannenden PV-Generators (2) eine Nennleistung (PN) des DC/AC-Wandlers (20) nicht übersteigt,
b) anschließendes Erfassen der Kennlinie des zu scannenden PV-Generators (2),
c) wobei während des Erfassens der Kennlinie eine Spannung (UZK) des Zwischenkreises (14) durch den DC/AC-Wandler (20) konstant gehalten wird, und
d) wobei während des Erfassens der Kennlinie die individuellen Ausgabeleistungen derjenigen DC/DC-Wandler (12), deren zugeordnete PV-Generatoren (2) nicht zum Erfassen der Kennlinie vorgesehen sind, konstant gehalten werden.

2. Verfahren zum Erfassen einer Kennlinie eines zu scannenden PV-Generators (2) einer Mehrzahl von PV-Generatoren (2) in einer Energieerzeugungsanlage (10), wobei die PV-Generatoren (2) jeweils über einen zugeordneten DC/DC-Wandler (12) ausgangsseitig in Serie mit einem Zwischenkreis (14) als Eingangselement eines DC/AC-Wandlers (20) verbunden sind, das Verfahren umfassend:
a) Reduzieren einer kumulativen Ausgabeleistung (KA) derjenigen DC/DC-Wandler (12), deren zugeordnete PV-Generatoren (2) nicht zum Erfassen der Kennlinie vorgesehen sind, in Abhängigkeit von einer während des Erfassens der Kennlinie des zu scannenden PV-Generators (2) zu erwartenden ausgangsseitigen Maximalleistung (Pscan) des mit dem zu scannenden PV-Generator (2) verbundenen DC/DC-Wandlers (12), um sicherzustellen, dass die Summe der kumulativen Ausgabeleistung (KA) und der zu erwartenden Maximalleistung (Pscan) des zu scannenden PV-Generators (2) eine Nennleistung (PN) des DC/AC-Wandlers (20) nicht übersteigt,
b) anschließendes Erfassen der Kennlinie des zu scannenden PV-Generators (2),
c1) wobei während des Erfassens der Kennlinie ein Strom der Serienschaltung der DC/DC-Wandler (12) durch den DC/AC-Wandler (20) konstant gehalten wird, und
d) wobei während des Erfassens der Kennlinie die individuellen Ausgabeleistungen derjenigen DC/DC-Wandler (12), deren zugeordnete PV-Generatoren (2) nicht zum Erfassen der Kennlinie vorgesehen sind, konstant gehalten werden.

3. Verfahren nach Anspruch 1, oder 2, wobei das Erfassen der Kennlinie des zu scannenden PV-Generators (2) in einem gesteuerten Betrieb des dem zu scannenden PV-Generator (2) zugeordneten DC/DC-Wandlers (12) erfolgt.

4. Verfahren nach Anspruch 3, wobei der gesteuerte Betrieb eine Strombegrenzung zur Vermeidung einer Überschreitung des zulässigen Eingangsstroms des dem zu scannenden PV-Generators (2) zugeordneten DC/DC-Wandlers (12) umfasst.

5. Verfahren nach Anspruch 3 oder 4, wobei der gesteuerte Betrieb eine Steuerung des Tastgrades des dem zu scannenden PV-Generator (2) zugeordneten DC/DC-Wandlers (12) aufweist, wobei der Scan zum Erfassen der Kennlinie insbesondere unter Verwendung eines Verlaufs des Tastgrades erfolgt.

6. Verfahren nach einem der vorhergehenden Ansprüche, wobei das Verfahren nach Erfassen der Kennlinie des zu scannenden PV-Generators (2) umfasst:
d) Beenden der Reduzierung der kumulativen Ausgabeleistung (KA) derjenigen DC/DC-Wandler (12), deren zugeordnete PV-Generatoren (2) nicht zum Erfassen der Kennlinie vorgesehen sind.

7. Schaltungsanordnung zum Erfassen einer Kennlinie eines zu scannenden PV-Generators (2) einer Mehrzahl von PV-Generatoren (2) in einer Energieerzeugungsanlage (10), wobei jeder der PV-Generatoren (2) jeweils über einen zugeordneten DC/DC-Wandler (12) ausgangsseitig parallel mit einem Zwischenkreis (14) als Eingangselement eines DC/AC-Wandlers (20) verbunden ist, wobei die Schaltungsanordnung vorgesehen und eingerichtet ist,
• diejenigen DC/DC-Wandler (12), deren zugeordnete PV-Generatoren (2) nicht zum Erfassen der Kennlinie vorgesehen sind, in Abhängigkeit von einer während des Erfassens der Kennlinie des zu scannenden PV-Generators (2) zu erwartenden ausgangsseitigen Maximalleistung (Pscan) des mit dem zu scannenden PV-Generator (2) verbundenen DC/DC-Wandlers (12) so zu regeln, dass ihre kumulative Ausgabeleistung (KA) reduziert wird, um sicherzustellen, dass die Summe der reduzierten kumulativen Ausgabeleistung (KA) und der zu erwartenden Maximalleistung (Pscan) eine Nennleistung (PN) des DC/AC-Wandlers (20) nicht übersteigt,
• die Kennlinie des zu scannenden PV-Generators (2) zu erfassen, und
• während des Erfassens der Kennlinie eine Spannung (UZK) des Zwischenkreises (14) und die individuellen Ausgabeleistungen derjenigen DC/DC-Wandler (12), deren zugeordnete PV-Generatoren (2) nicht zum Erfassen der Kennlinie vorgesehen sind, konstant zu halten.

8. Schaltungsanordnung zum Erfassen einer Kennlinie eines zu scannenden PV-Generators (2) einer Mehrzahl von PV-Generatoren (2) in einer Energieerzeugungsanlage (10), wobei die PV-Generatoren (2) jeweils über einen zugeordneten DC/DC-Wandler (12) ausgangsseitig in Serie mit einem Zwischenkreis (14) als Eingangselement eines DC/AC-Wandlers (20) verbunden sind, wobei die Schaltungsanordnung vorgesehen und eingerichtet ist,
• diejenigen DC/DC-Wandler (12), deren zugeordnete PV-Generatoren (2) nicht zum Erfassen der Kennlinie vorgesehen sind, in Abhängigkeit von einer während des Erfassens der Kennlinie des zu scannenden PV-Generators (2) zu erwartenden ausgangsseitigen Maximalleistung (Pscan) des mit dem zu scannenden PV-Generator (2) verbundenen DC/DC-Wandlers (12) so zu regeln, dass ihre kumulative Ausgabeleistung (KA) reduziert wird, um sicherzustellen, dass die Summe der reduzierten kumulativen Ausgabeleistung (KA) und der zu erwartenden Maximalleistung (Pscan) eine Nennleistung (PN) des DC/AC-Wandlers (20) nicht übersteigt,
• die Kennlinie des zu scannenden PV-Generators (2) zu erfassen, und
• während des Erfassens der Kennlinie einen Strom durch die Serienschaltung der DC/DC-Wandler (12) und die individuellen Ausgabeleistungen derjenigen DC/DC-Wandler (12), deren zugeordnete PV-Generatoren (2) nicht zum Erfassen der Kennlinie vorgesehen sind, konstant zu halten.

9. Schaltungsanordnung nach Anspruch 7 oder 8, wobei die Schaltungsanordnung in dem DC/AC-Wandler (20) und/oder den DC/DC-Wandlern (12) angeordnet ist.

10. Schaltungsanordnung nach Anspruch 7, 8 oder 9, wobei die Schaltungsanordnung zur Steuerung und/oder Regelung des DC/AC-Wandlers (20) und/oder der DC/DC-Wandler (12) vorgesehen und eingerichtet ist.

11. Energieerzeugungsanlage (10) mit einem DC/AC-Wandler (20) und mit einer Mehrzahl von PV-Generatoren (2), wobei die PV-Generatoren (2) jeweils über einen zugeordneten DC/DC-Wandler (12) ausgangsseitig parallel oder in Serie mit einem Zwischenkreis (14) als Eingangselement des DC/AC-Wandlers (20) verbunden sind, und wobei die Energieerzeugungsanlage (10) eine Schaltungsanordnung nach einem der Ansprüche 7 bis 9 aufweist.

## Claims

1. A method for acquiring a characteristic curve of a PV generator (2) to be scanned from a plurality of PV generators (2) in a power generation installation (10), wherein the output side of each of the PV generators (2) is connected, in each case via an assigned DC-DC converter (12), in parallel to a DC link (14) as the input element of a DC-AC converter (20), the method comprising:
a) reducing a cumulative output power (KA) of those DC-DC converters (12) for which the associated PV generators (2) are not intended for acquiring the characteristic curve, as a function of a maximum power (Pscan) that, during the acquisition of the characteristic curve of the PV generator (2) to be scanned, is to be expected on the output side of the DC-DC converter (12) connected to the PV generator (2) to be scanned, in order to ensure that the sum of the reduced cumulative output power (KA) and of the expected maximum power (Pscan) of the PV generator (2) to be scanned does not exceed a nominal power (PN) of the DC-AC converter (20),
b) subsequently acquiring the characteristic curve of the PV generator (2) to be scanned,
c) wherein, during the acquisition of the characteristic curve, a voltage (UZK) of the DC link (14) is kept constant using the DC-AC converter (20), and
d) wherein, during the acquisition of the characteristic curve, the individual output powers of those DC-DC converters (12) for which the associated PV generators (2) are not intended for acquiring the characteristic curve are kept constant.

2. A method for acquiring a characteristic curve of a PV generator (2) to be scanned from a plurality of PV generators (2) in a power generation installation (10), wherein the output sides of the PV generators (2) are connected, in each case via an assigned DC-DC converter (12), in series to a DC link (14) as the input element of a DC-AC converter (20), the method comprising:
a) reducing a cumulative output power (KA) of those DC-DC converters (12) for which the associated PV generators (2) are not intended for acquiring the characteristic curve, as a function of a maximum power (Pscan) that, during the acquisition of the characteristic curve of the PV generator (2) to be scanned, is to be expected on the output side of the DC-DC converter (12) connected to the PV generator (2) to be scanned, in order to ensure that the sum of the cumulative output power (KA) and of the expected maximum power (Pscan) of the PV generator (2) to be scanned does not exceed a nominal power (PN) of the DC-AC converter (20),
b) subsequently acquiring the characteristic curve of the PV generator (2) to be scanned,
c1) wherein, during the acquisition of the characteristic curve, a current of the series circuit of the DC-DC converters (12) is kept constant using the DC-AC converter (20), and
d) wherein, during the acquisition of the characteristic curve, the individual output powers of those DC-DC converters (12) for which the associated PV generators (2) are not intended for acquiring the characteristic curve are kept constant.

3. The method as claimed in claim 1 or 2, wherein the characteristic curve of the PV generator (2) to be scanned is acquired during open-loop operation of the DC-DC converter (12) assigned to the PV generator (2) to be scanned.

4. The method as claimed in claim 3, wherein the open-loop operation involves current limiting so as to avoid the permissible input current of the DC-DC converter (12) assigned to the PV generator (2) to be scanned being exceeded.

5. The method as claimed in claim 3 or 4, wherein the open-loop operation involves setting the duty cycle of the DC-DC converter (12) assigned to the PV generator (2) to be scanned, wherein the scan for acquiring the characteristic curve is performed in particular using a curve of the duty cycle.

6. The method as claimed in one of the preceding claims, wherein, after acquiring the characteristic curve of the PV generator (2) to be scanned, the method comprises:
d) ending the reduction of the cumulative output power (KA) of those DC-DC converters (12) for which the associated PV generators (2) are not intended for acquiring the characteristic curve.

7. A circuit arrangement for acquiring a characteristic curve of a PV generator (2) to be scanned from a plurality of PV generators (2) in a power generation installation (10), wherein the output side of each of the PV generators (2) is connected, in each case via an assigned DC-DC converter (12), in parallel to a DC link (14) as the input element of a DC-AC converter (20), wherein the circuit arrangement is intended and configured
• to regulate those DC-DC converters (12) for which the associated PV generators (2) are not intended for acquiring the characteristic curve, as a function of a maximum power (Pscan) that, during the acquisition of the characteristic curve of the PV generator (2) to be scanned, is to be expected on the output side of the DC-DC converter (12) connected to the PV generator (2) to be scanned, such that their cumulative output power (KA) is reduced, in order to ensure that the sum of the reduced cumulative output power (KA) and of the expected maximum power (Pscan) does not exceed a nominal power (PN) of the DC-AC converter (20),
• to acquire the characteristic curve of the PV generator (2) to be scanned, and
• to keep a voltage (UZK) of the DC link (14) and the individual output powers of those DC-DC converters (12) for which the associated PV generators (2) are not intended for acquiring the characteristic curve constant during the acquisition of the characteristic curve.

8. A circuit arrangement for acquiring a characteristic curve of a PV generator (2) to be scanned from a plurality of PV generators (2) in a power generation installation (10), wherein the output sides of the PV generators (2) are connected, in each case via an assigned DC-DC converter (12), in series to a DC link (14) as the input element of a DC-AC converter (20), wherein the circuit arrangement is intended and configured
• to regulate those DC-DC converters (12) for which the associated PV generators (2) are not intended for acquiring the characteristic curve, as a function of a maximum power (Pscan) that, during the acquisition of the characteristic curve of the PV generator (2) to be scanned, is to be expected on the output side of the DC-DC converter (12) connected to the PV generator (2) to be scanned, such that their cumulative output power (KA) is reduced, in order to ensure that the sum of the reduced cumulative output power (KA) and of the expected maximum power (Pscan) does not exceed a nominal power (PN) of the DC-AC converter (20),
• to acquire the characteristic curve of the PV generator (2) to be scanned, and
• to keep a current through the series circuit of the DC-DC converters (12) and the individual output powers of those DC-DC converters (12) for which the associated PV generators (2) are not intended for acquiring the characteristic curve constant during the acquisition of the characteristic curve.

9. The circuit arrangement as claimed in claim 7 or 8, wherein the circuit arrangement is arranged in the DC-AC converter (20) and/or in the DC-DC converters (12).

10. The circuit arrangement as claimed in claim 7, 8 or 9, wherein the circuit arrangement is intended and configured to control the DC-AC converter (20) and/or the DC-DC converters (12) in an open-loop and/or closed-loop manner.

11. A power generation installation (10) having a DC-AC converter (20) and having a plurality of PV generators (2), wherein the output sides of the PV generators (2) are connected, in each case via an assigned DC-DC converter (12), in parallel or in series to a DC link (14) as the input element of the DC-AC converter (20), and wherein the power generation installation (10) comprises a circuit arrangement as claimed in one of claims 7 to 9.

## Revendications

1. Procédé de détection d'une courbe caractéristique d'un générateur PV (2) à balayer d'une pluralité de générateurs PV (2) dans une installation de production d'énergie (10), chacun des générateurs PV (2) étant relié en parallèle, côté sortie, par l'intermédiaire d'un convertisseur DC/DC (12) associé, à un circuit intermédiaire (14) en tant qu'élément d'entrée d'un convertisseur DC/AC (20), le procédé comprenant:
a) Réduire une puissance de sortie cumulée (KA) des convertisseurs DC/DC (12) dont les générateurs PV (2) associés ne sont pas prévus pour la détection de la courbe caractéristique, en fonction d'une puissance maximale côté sortie (Pscan) du convertisseur DC/DC (12) relié au générateur PV (2) à balayer, à laquelle on peut s'attendre pendant la détection de la courbe caractéristique du générateur PV (2) à balayer, pour s'assurer que la somme de la puissance de sortie cumulée réduite (KA) et de la puissance maximale attendue (Pscan) du générateur PV (2) à balayer ne dépasse pas une puissance nominale (PN) du convertisseur DC/AC (20),
b) détection subséquente de la courbe caractéristique du générateur PV (2) à balayer,
c) une tension (UZK) du circuit intermédiaire (14) étant maintenue constante par le convertisseur DC/AC (20) pendant la saisie de la courbe caractéristique, et
d) dans lequel, pendant la détection de la courbe caractéristique, les puissances de sortie individuelles des convertisseurs DC/DC (12) dont les générateurs PV (2) associés ne sont pas prévus pour la détection de la courbe caractéristique, sont maintenues constantes.

2. Procédé de détection d'une courbe caractéristique d'un générateur PV (2) à balayer parmi une pluralité de générateurs PV (2) dans une installation de production d'énergie (10), les générateurs PV (2) étant reliés chacun en série côté sortie à un circuit intermédiaire (14) en tant qu'élément d'entrée d'un convertisseur DC/AC (20) par l'intermédiaire d'un convertisseur DC/DC (12) associé, le procédé comprenant:
a) Réduire une puissance de sortie cumulée (KA) des convertisseurs DC/DC (12) dont les générateurs PV (2) associés ne sont pas prévus pour la détection de la courbe caractéristique, en fonction d'une puissance maximale côté sortie (Pscan) du convertisseur DC/DC (12) relié au générateur PV (2) à balayer, à laquelle on peut s'attendre pendant la détection de la courbe caractéristique du générateur PV (2) à balayer, pour s'assurer que la somme de la puissance de sortie cumulée (KA) et de la puissance maximale attendue (Pscan) du générateur PV (2) à balayer ne dépasse pas une puissance nominale (PN) du convertisseur DC/AC (20),
b) détection subséquente de la courbe caractéristique du générateur PV (2) à balayer,
c) un courant du circuit série des convertisseurs DC/DC (12) étant maintenu constant par le convertisseur DC/AC (20) pendant la saisie de la courbe caractéristique, et
d) dans lequel, pendant la détection de la courbe caractéristique, les puissances de sortie individuelles des convertisseurs DC/DC (12) dont les générateurs PV (2) associés ne sont pas prévus pour la détection de la courbe caractéristique, sont maintenues constantes.

3. Procédé selon la revendication 1 ou 2, dans lequel l'acquisition de la courbe caractéristique du générateur PV (2) à balayer s'effectue dans un fonctionnement commandé du convertisseur DC/DC (12) associé au générateur PV (2) à balayer.

4. Procédé selon la revendication 3, dans lequel le fonctionnement commandé comprend une limitation de courant pour éviter un dépassement du courant d'entrée admissible du convertisseur DC/DC (12) associé au générateur PV (2) à balayer.

5. Procédé selon la revendication 3 ou 4, dans lequel le fonctionnement commandé comprend une commande du taux d'impulsions du convertisseur DC/DC (12) associé au générateur PV (2) à balayer, le balayage pour détecter la courbe caractéristique s'effectuant notamment en utilisant une courbe du taux d'impulsions.

6. Procédé selon l'une quelconque des revendications précédentes, ledit procédé comprenant, après acquisition de la courbe caractéristique du générateur photovoltaïque (2) à bilayer:
d) arrêt de la réduction de la puissance de sortie cumulée (KA) des convertisseurs DC/DC (12) dont les générateurs PV (2) associés ne sont pas prévus pour la détection de la courbe caractéristique.

7. Circuit pour détecter une courbe caractéristique d'un générateur PV (2) à balayer d'une pluralité de générateurs PV (2) dans une installation de production d'énergie (10), chacun des générateurs PV (2) étant relié en parallèle côté sortie par un convertisseur DC/DC (12) associé à un circuit intermédiaire (14) comme élément d'entrée d'un convertisseur DC/AC (20), le circuit étant prévu et aménagé,
• de régler les convertisseurs DC/DC (12) dont les générateurs PV (2) associés ne sont pas prévus pour la détection de la courbe caractéristique, en fonction d'une puissance maximale (Pscan) côté sortie du convertisseur DC/DC (12) relié au générateur PV (2) à balayer, à laquelle il faut s'attendre pendant la détection de la courbe caractéristique du générateur PV (2) à balayer, de telle sorte, que sa puissance de sortie cumulée (KA) est réduite afin de garantir que la somme de la puissance de sortie cumulée réduite (KA) et de la puissance maximale attendue (Pscan) ne dépasse pas une puissance nominale (PN) du convertisseur DC/AC (20),
• saisir la courbe caractéristique du générateur photovoltaïque (2) à balayer, et
• pendant la détection de la courbe caractéristique, maintenir constantes une tension (UZK) du circuit intermédiaire (14) et les puissances de sortie individuelles des convertisseurs DC/DC (12) dont les générateurs PV (2) associés ne sont pas prévus pour la détection de la courbe caractéristique.

8. Circuit pour détecter une courbe caractéristique d'un générateur PV (2) à balayer d'une pluralité de générateurs PV (2) dans une installation de production d'énergie (10), les générateurs PV (2) étant reliés chacun en série côté sortie à un circuit intermédiaire (14) en tant qu'élément d'entrée d'un convertisseur DC/AC (20) par l'intermédiaire d'un convertisseur DC/DC (12) associé, le circuit étant prévu et agencé
• de régler les convertisseurs DC/DC (12) dont les générateurs PV (2) associés ne sont pas prévus pour la saisie de la courbe caractéristique, en fonction d'une puissance maximale (Pscan) côté sortie du convertisseur DC/DC (12) relié au générateur PV (2) à balayer, à laquelle il faut s'attendre pendant la saisie de la courbe caractéristique du générateur PV (2) à balayer, de telle sorte que, que sa puissance de sortie cumulée (KA) est réduite afin de garantir que la somme de la puissance de sortie cumulée réduite (KA) et de la puissance maximale attendue (Pscan) ne dépasse pas une puissance nominale (PN) du convertisseur DC/AC (20),
• saisir la courbe caractéristique du générateur photovoltaïque (2) à balayer, et
• pendant la détection de la courbe caractéristique, à maintenir constant un courant traversant le circuit série des convertisseurs DC/DC (12) et les puissances de sortie individuelles de ces convertisseurs DC/DC (12) dont les générateurs PV (2) associés ne sont pas prévus pour détecter la courbe caractéristique.

9. Circuit selon la revendication 7 ou 8, dans lequel le circuit est disposé dans le convertisseur DC/AC (20) et/ou les convertisseurs DC/DC (12).

10. Circuit selon la revendication 7, 8 ou 9, dans lequel le circuit est prévu et aménagé pour la commande et/ou la régulation du convertisseur DC/AC (20) et/ou des convertisseurs DC/DC (12).

11. Installation de production d'énergie (10) avec un convertisseur DC/AC (20) et avec une pluralité de générateurs PV (2), les générateurs PV (2) étant respectivement reliés côté sortie en parallèle ou en série avec un circuit intermédiaire (14) en tant qu'élément d'entrée du convertisseur DC/AC (20) par l'intermédiaire d'un convertisseur DC/DC (12) associé, et l'installation de production d'énergie (10) présentant un agencement de circuit selon l'une des revendications 7 à 9.
